# EUROPÄISCHE PATENTSCHRIFT

(11) **EP 4 302 590 B1**
(45) Veröffentlichungstag und Bekanntmachung des Hinweises auf die Patenterteilung: **11.03.2026**
(21) Anmeldenummer: 23172885.8
(22) Anmeldetag: 11.05.2023
(51) Int. Cl.: A01D 75/18, A01D 75/20

(54) **LANDWIRTSCHAFTLICHE ARBEITSMASCHINE MIT EINER DROHNENVORRICHTUNG**
AGRICULTURAL MACHINE WITH A DRONE DEVICE
MACHINE DE TRAVAIL AGRICOLE COMPRENANT UN DISPOSITIF DRONE

(30) Priorität: 04.07.2022 DE 102022116619
(43) Veröffentlichungstag der Anmeldung: 10.01.2024
(73) Patentinhaber: CLAAS Selbstfahrende Erntemaschinen GmbH, 33428 Harsewinkel (DE)
(72) Erfinder: von Nordheim, Maximilian, 33619 Bielefeld (DE)
(74) Vertreter: CLAAS Gruppe

(56) Entgegenhaltungen:
- EP-A1- 3 414 982
- EP-B1- 3 068 208
- DE-A1- 102014 201 203
- US-A1- 2021 357 664

## Beschreibung

Die vorliegende Erfindung betrifft eine selbstfahrende landwirtschaftliche Arbeitsmaschine mit wenigstens einer Drohnenvorrichtung.

Die EP 3 068 208 B1 beschreibt ein System zum Erfassen von Parametern der Umwelt und Umgebung in Verbindung mit landwirtschaftlichen Arbeitsmaschinen. Das System weist mindestens ein zum senkrechten Starten und Landen ausgebildetes unbemanntes Luftfahrzeug auf, das eine Energiespeichereinheit und mindestens eine Aufnahme zum Transport von mindestens einer Funktionseinheit aufweist. Weiterhin weist das System mindestens eine an einem Bodenfahrzeug anordenbare Start- und Landevorrichtung für mindestens ein unbemanntes Luftfahrzeug auf, die mindestens eine erste Vorrichtung, die zum Austausch, Laden und/oder Nachfüllen der Energiespeichereinheit von unbemannten Luftfahrzeugen ausgebildet ist und mindestens eine zweite Vorrichtung mit einem Magazin zur temporären Aufnahme von Funktionseinheiten aufweist, die zum Austausch von Funktionseinheiten an unbemannten Luftfahrzeugen ausgebildet ist. Mittels mindestens einer Steuerungseinrichtung ist eine autonome Bewegung des unbemannten Luftfahrzeugs relativ zum Bodenfahrzeug steuerbar, wobei die erfassten Parameter an die Steuerungseinrichtung drahtlos übertragbar sind.

Ferner sieht die EP 3 068 208 B1 vor, dass als Parameter der Umgebung vornehmlich solche Kenngrößen verstanden werden, die eine topographische Aufklärung einschließlich einer Erfassung von Hindernissen, wie beispielsweise Menschen, Tiere oder Fahrzeuge, oder Grenzen ermöglichen.

Die EP 3 414 982 A1 offenbart eine weitere selbstfahrende landwirtschaftliche Arbeitsmaschine zur Ernte eines Gutes eines landwirtschaftlichen Feldes, mit wenigstens einer Drohnenvorrichtung zur Erfassung von Hindernissen im landwirtschaftlichen Feld nach dem Oberbegriff des Anspruchs 1.

Der vorliegenden Erfindung liegt die Aufgabe zugrunde, eine verbesserte oder zumindest eine alternative Ausführungsform einer selbstfahrenden landwirtschaftlichen Arbeitsmaschine mit wenigstens einer Drohnenvorrichtung anzugeben, wobei insbesondere eine arbeitstechnisch optimierte Bearbeitung eines landwirtschaftlichen Feldes mittels der selbstfahrenden landwirtschaftlichen Arbeitsmaschine ermöglicht wird.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, dass mittels der Drohnenvorrichtung ein Hindernis des landwirtschaftlichen Feldes markiert wird.

Die erfindungsgemäße selbstfahrende landwirtschaftliche Arbeitsmaschine kann als selbstfahrender Mähdrescher oder als selbstfahrender Feldhäcksler zur Ernte eines Gutes eines landwirtschaftlichen Feldes ausgebildet sein. Ferner weist die erfindungsgemäße selbstfahrende landwirtschaftliche Arbeitsmaschine wenigstens eine Drohnenvorrichtung zur Erfassung von Hindernissen im landwirtschaftlichen Feld auf.

Die Drohnenvorrichtung kann als autonom fliegende Drohnenvorrichtung und/oder als autonom fliegendes unbemanntes Luftfahrzeug ausgebildet sein. Hierdurch kann ohne weitere menschliche Eingriffe bzw. Steuerungen eine Flugpositionierung der Drohnenvorrichtung relativ zur und/oder bezüglich der selbstfahrenden landwirtschaftlichen Arbeitsmaschine bewirkt und/oder ausgeführt werden.

Die Hindernisse im landwirtschaftlichen Feld, die von der Drohnenvorrichtung erfasst werden können, können Lebewesen, insbesondere Menschen und/oder Tiere, sein. Alternativ oder zusätzlich können die Hindernisse solche Gegenstände sein, die eine Beschädigung der selbstfahrenden landwirtschaftlichen Arbeitsmaschine und/oder eine Verschlechterung der Qualität des geernteten Gutes des landwirtschaftlichen Feldes bewirken. Mit anderen Worten ausgedrückt, kann die Drohnenvorrichtung zur Erfassung, insbesondere zur berührungslosen Erfassung, solcher Hindernisse ausgebildet und/oder programmiert sein.

Die Drohnenvorrichtung ist dazu ausgebildet und/oder programmiert, sich über einem erfassten Hindernis zu positionieren. Hierbei kann sich die Drohnenvorrichtung, insbesondere bezüglich der Erdanziehungsrichtung der Erdanziehungskraft, über einem erfassten Hindernis derart positionieren, dass wenigstens ein Teil des erfassten Hindernisses, insbesondere bezüglich der Erdanziehungsrichtung der Erdanziehungskraft, unterhalb der Drohnenvorrichtung liegt. Mit anderen Worten ausgedrückt, verharrt die Drohnenvorrichtung über dem erfassten und/oder gefundenen Hindernis.

Der erfindungsgemäße Vorteil ist insbesondere darin zu sehen, dass die Hindernisse rechtzeitig erkannt werden können, sodass die selbstfahrende landwirtschaftliche Arbeitsmaschine nicht durch Hindernisse verunreinigt und/oder beschädigt wird.

Ein erfindungsgemäßer Vorteil ist insbesondere darin zu sehen, dass die Hindernisse in Form von Lebewesen rechtzeitig erkannt werden, sodass diese Lebewesen weder schwer verletzt noch getötet werden. Somit wird durch die Erfindung vermieden, dass ein Vorfall stattfindet, in dem Tierkadaver auf einem Futtersilo eines Landwirtes landet. Solche Tierkadaver führen durch Clostridien im schlimmsten Fall zu einer Kontaminierung des Futters im Futtersilo, sodass ein Verzehr des kontaminierten Futters durch die Tiere zu tödlichem Botulismus führen kann. Der Verlust mehrerer Tiere durch verseuchtes Futter ist für den Landwirt sehr Nachteilig und führt oft zu einer unvermeidbaren Vernichtung des kompletten Silobestandes. Diese Nachteile bezüglich Silobestandes werden durch die Erfindung vermieden.

Durch den Einsatz der erfindungsgemäßen selbstfahrenden landwirtschaftlichen Arbeitsmaschine mit der dazugehörigen Drohnenvorrichtung können Hindernisse rechtzeitig erkannt werden, ohne dass neben einem Fahrer der selbstfahrenden landwirtschaftlichen Arbeitsmaschine zusätzliche weitere Personengruppen mit Hunden und/oder mit menschlich gesteuerten bzw. nicht autonomen Drohnenvorrichtungen zur Erfassung von Hindernissen in Form von Lebewesen erforderlich sind. Mit anderen Worten ausgedrückt, wird die Ernte zeitlich und bezüglich der Qualität der Erntegutes als auch bezüglich der Sicherheit der Lebewesen im Bereich des landwirtschaftlichen Feldes mittels der erfindungsgemäßen selbstfahrenden landwirtschaftlichen Arbeitsmaschine optimiert.

Bei einer vorteilhaften Weiterbildung der erfindungsgemäßen Lösung ist vorgesehen, dass die Drohnenvorrichtung dazu ausgebildet und/oder programmiert ist, ein Hindernis in Form eines Lebewesens zu erfassen und sich über diesem erfassten Lebewesen zu positionieren. Dies ermöglicht es dem Fahrer der selbstfahrenden landwirtschaftlichen Arbeitsmaschine ohne größeren Suchaufwand unmittelbar das von der Drohnenvorrichtung erfasste Lebewesen im landwirtschaftlichen Feld zu orten bzw. die Position des erfassten Lebewesens bezüglich der selbstfahrenden landwirtschaftlichen Arbeitsmaschine zu erfassen, da sich die Drohnenvorrichtung über dem erfassten Lebewesen positioniert hat, sodass das erfasste Lebewesen unter der Drohnenvorrichtung ist.

Bei einer vorteilhaften Weiterbildung der erfindungsgemäßen Lösung ist vorgesehen, dass die Drohnenvorrichtung dazu ausgebildet und/oder programmiert ist, die Position über dem erfassten Lebewesen beizubehalten, wenn sich das erfasste Lebewesen auf dem landwirtschaftlichen Feld bewegt. Dies hat den Vorteil, es dem Fahrer der selbstfahrenden landwirtschaftlichen Arbeitsmaschine ohne größeren Suchaufwand ermöglicht wird, stets die Position des erfassten Lebewesens einfach und schnell zu erfassen. Hierbei kann es vorgesehen sein, dass die Drohnenvorrichtung dazu ausgebildet und/oder programmiert ist, bei der Verfolgung des erfassten Lebewesen Kollisionen mit der selbstfahrenden landwirtschaftlichen Arbeitsmaschine zu vermeiden, falls sich das erfasste Lebewesen beispielsweise unkontrolliert in einen zu nahen Bereich der selbstfahrenden landwirtschaftlichen Arbeitsmaschine bewegt.

Bei einer vorteilhaften Weiterbildung der erfindungsgemäßen Lösung ist vorgesehen, dass die Drohnenvorrichtung wenigstens eine Kameravorrichtung zur Erfassung von Hindernissen, insbesondere von Lebewesen, im landwirtschaftlichen Feld aufweist. Die Drohnenvorrichtung kann eine Kameravorrichtung oder mehrere Kameravorrichtungen aufweisen. Hierbei kann die Drohnenvorrichtung derart ausgebildet sein, dass die wenigstens eine Kameravorrichtung zur Fassung von Hindernissen im Flugmodus der Drohnenvorrichtung derart in Richtung des landwirtschaftlichen Feldes ausgerichtet und/oder positioniert es, dass die wenigstens eine Kameravorrichtung Bilddaten bezüglich des landwirtschaftlichen Feldes, insbesondere des landwirtschaftlichen Feldes unterhalb der Drohnenvorrichtung, zu erfassen.

Bei einer vorteilhaften Weiterbildung der erfindungsgemäßen Lösung ist vorgesehen, dass die Drohnenvorrichtung dazu ausgebildet und/oder programmiert ist, ein akustisches Warnsignal und/oder optisches Warnsignal zu erzeugen, während die Drohnenvorrichtung über dem erfassten Hindernis, insbesondere dem erfassten Lebewesen, positioniert ist. Hierbei kann es vorgesehen sein, dass das akustische Warnsignal und/oder das optische Warnsignal derart ausgebildet ist, dass der Fahrer der selbstfahrenden landwirtschaftlichen Arbeitsmaschine dieses akustische Warnsignal und/oder dieses optische Warnsignal erfassen kann. Hierbei kann es vorgesehen sein, dass die Drohnenvorrichtung eine Akustikvorrichtung zur Erzeugung des akustischen Warnsignals und/oder eine Lichtvorrichtung zur Erzeugung des optischen Warnsignals aufweist. Alternativ oder zusätzlich kann die Drohnenvorrichtung dazu ausgebildet und/oder programmiert ist, ein akustisches Warnsignal und/oder ein optisches Warnsignal innerhalb der Fahrerkabine der selbstfahrenden landwirtschaftlichen Arbeitsmaschine zu initiieren. Hierfür kann die selbstfahrende landwirtschaftliche Arbeitsmaschine eine Akustikvorrichtung zur Erzeugung des akustischen Warnsignals und/oder eine Lichtvorrichtung zur Erzeugung des optischen Warnsignals aufweisen.

Bei einer vorteilhaften Weiterbildung der erfindungsgemäßen Lösung ist vorgesehen, dass die landwirtschaftliche Arbeitsmaschine wenigstens eine Steuervorrichtung zur Steuerung und/oder Regelung der landwirtschaftlichen Arbeitsmaschine und/oder Komponenten der landwirtschaftlichen Arbeitsmaschine aufweist. Ferner weist die Drohnenvorrichtung wenigstens eine Drohnen-Steuervorrichtung zur Steuerung und/oder Regelung der Drohnenvorrichtung und/oder Komponenten der Drohnenvorrichtung auf.

Vorzugsweise kann sich der Begriff "Steuervorrichtung" und/oder Drohnen-Steuervorrichtung auf eine Elektronikschaltung (z. B. mit Mikroprozessor(en) und Datenspeicher(n)) und/oder eine mechanische Steuerung beziehen, die je nach Ausbildung Steuerungsaufgaben und/oder Regelungsaufgaben übernehmen und/oder ausführen kann. Auch wenn hierin der Begriff "Steuern" verwendet wird, kann damit gleichsam zweckmäßig auch "Regeln" bzw. "Steuern mit Rückkopplung" umfasst sein.

Die Steuervorrichtung der landwirtschaftlichen Arbeitsmaschine und die Drohnen-Steuervorrichtung der Drohnenvorrichtung sind kommunizierend miteinander verbunden.

Unter einer kommunizierenden Verbindung kann hier zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Ferner können diese miteinander kommunizierend verbundenen Komponenten eine drahtlose Datenverbindung und/oder eine drahtlose Kommunikationsverbindung zur Datenübertragung ausbilden. Die drahtlose Datenverbindung und/oder eine drahtlose Kommunikationsverbindung zur Datenübertragung kann als eine WLAN-Verbindung, insbesondere mit einer Reichweite bis zu 50 m, und/oder als eine Funkverbindung, insbesondere mit einer Reichweite bis zu 2000 m, ausgebildet sein.

Bei einer vorteilhaften Weiterbildung der erfindungsgemäßen Lösung ist vorgesehen, dass die Drohnen-Steuervorrichtung zur Bestimmung von Positionsdaten der Drohnenvorrichtung bezüglich des landwirtschaftlichen Feldes mit einer Positionsbestimmungsvorrichtung kommunizierend verbunden ist. Die Positionsbestimmungsvorrichtung kann ein Globales Positionsbestimmungssystem und/oder ein GNSS (Global Navigation(al) Satellite System) sein. Auch die Steuervorrichtung der landwirtschaftlichen Arbeitsmaschine kann zur Bestimmung von Positionsdaten der landwirtschaftlichen Arbeitsmaschine bezüglich des landwirtschaftlichen Feldes kommunizierend mit der Positionsbestimmungsvorrichtung verbunden sein.

Die Drohnen-Steuervorrichtung der Drohnenvorrichtung ist dazu ausgebildet und/oder programmiert, die mit der Positionsbestimmungsvorrichtung bestimmten Positionsdaten der Drohnenvorrichtung bezüglich des landwirtschaftlichen Feldes an die Steuervorrichtung der landwirtschaftlichen Arbeitsmaschine zu übermitteln, wenn die Drohnenvorrichtung über dem erfassten Hindernis, insbesondere über dem erfassten Lebewesen, positioniert ist. Hierdurch wird die Steuervorrichtung der landwirtschaftlichen Arbeitsmaschine bezüglich der Position des erfassten Hindernisses informiert. Hierbei kann die Steuervorrichtung der landwirtschaftlichen Arbeitsmaschine dazu ausgebildet und/oder programmiert sein, basierend auf Positionsdaten der landwirtschaftlichen Arbeitsmaschine und den von der Drohnenvorrichtung übermittelten Position des erfassten Hindernisses die Beabstandung zwischen der landwirtschaftlichen Arbeitsmaschine und dem erfassten Hindernis zu ermitteln. Je nach ermittelter Beabstandung zwischen der landwirtschaftlichen Arbeitsmaschine und dem erfassten Hindernis kann die die Steuervorrichtung der landwirtschaftlichen Arbeitsmaschine dazu ausgebildet und/oder programmiert sein, die landwirtschaftliche Arbeitsmaschine abzubremsen, insbesondere zu stoppen, und/oder eine Routenänderung der landwirtschaftlichen Arbeitsmaschine zu bewirken.

Bei einer vorteilhaften Weiterbildung der erfindungsgemäßen Lösung ist vorgesehen, dass die Steuervorrichtung der landwirtschaftlichen Arbeitsmaschine dazu ausgebildet und/oder programmiert ist, Routendaten bezüglich einer Route der landwirtschaftlichen Arbeitsmaschine an die Drohnen-Steuervorrichtung der Drohnenvorrichtung zu übermitteln, wobei die Drohnen-Steuervorrichtung der Drohnenvorrichtung dazu ausgebildet und/oder programmiert ist, die Drohnenvorrichtung basierend auf den Routendaten entlang der Route der landwirtschaftlichen Arbeitsmaschine derart anzusteuern und/oder zu steuern, dass die Drohnenvorrichtung die auf den Routendaten basierende Route abfliegt, bevor die landwirtschaftliche Arbeitsmaschine diese Route abfährt, wobei das Abfliegen der auf den Routendaten basierende Route unterbrochen wird, wenn sich die Drohnenvorrichtung über dem erfassten Hindernis, insbesondere dem Lebewesen, positioniert. Hierdurch wird ermöglicht, dass die Drohnenvorrichtung zu Markierung der Position des erfassten Hindernisses verwendet wird.

Hierbei können die Routendaten, insbesondere in Form von GPS-Daten und/oder GNSS-Daten, auch die Fläche des landwirtschaftlichen Feldes, die von der selbstfahrenden landwirtschaftlichen Arbeitsmaschine bearbeitet wird, umfassen. Hierdurch kann für die Drohnenvorrichtung ein bezüglich des landwirtschaftlichen Feldes begrenzter Arbeitsraum definiert werden, die die Drohnenvorrichtung bezüglich Hindernisse überprüft. Diese Routendaten können wenigstens eine Fahrrichtung und/oder mehrere Fahrrichtungen der selbstfahrenden landwirtschaftlichen Arbeitsmaschine und/oder Wendestrategien und/oder Wendebereiche angeben. Ferner kann die Drohnenvorrichtung dazu ausgebildet und/oder programmiert sein, basierend auf diesen Routendaten mit einer definierten Beabstandung, insbesondere einer Minimal-Beabstandung, zur selbstfahrenden landwirtschaftlichen Arbeitsmaschine das landwirtschaftliche Feld bezüglich Hindernisse zu überwachen.

Die Fläche des Feldes wird der Drohnenvorrichtung im Vorhinein per GPS Daten übermittelt um einen begrenzten Arbeitsraum zu schaffen. Außerdem wird die Fahrrichtung und Wendestrategie angegeben, um den Flug der Drohnenvorrichtung möglichst so zu gestalten, dass diese der Erntemaschine immer ein kurzes Stück voraus fliegt.

Bei einer vorteilhaften Weiterbildung der erfindungsgemäßen Lösung ist vorgesehen, dass eine Kameravorrichtung zur Erfassung von Hindernissen, insbesondere von Lebewesen, eine Infrarotkamera und/oder Wärmebildkamera ist. Alternativ oder zusätzlich kann eine Kameravorrichtung zur Erfassung von Hindernissen, insbesondere von Lebewesen, als Farberkennungsvorrichtung ausgebildet sein. Eine solche Farberkennungsvorrichtung kann beispielsweise eine Kameravorrichtung zur Fassung und/oder zur Messung eines Farbspektrums ausgebildet und/oder programmiert sein. Hierbei können bräunliche Farben Hindernissen zugeordnet werden, während grünliche Farben dem zu erntenden Gut des landwirtschaftlichen Feldes zugeordnet werden können.

Bei einer vorteilhaften Weiterbildung der erfindungsgemäßen Lösung ist vorgesehen, dass dass wenigstens eine Kameravorrichtung dazu ausgebildet und/oder programmiert ist, das zu erntende Gut des landwirtschaftlichen Feldes solange zu erfassen, bis die Drohnenvorrichtung über einem erfassten Hindernis, insbesondere einem erfassten Lebewesen, positioniert ist. Hierbei können von der Kameravorrichtung beispielsweise Bilddaten in Bezug auf Zustand des Bestands im Feld erzeugt und ausgewertet werden. Mittels NIR Inhaltsstoffdaten und Bildmaterial der Kameravorrichtung können Ergebniswerte, insbesondere mittels neuronaler Netzwerke, für Inhaltsstoffe erzeugt werden. Eine Kartierung der gewonnenen Informationen kann vorgesehen sein. Hierdurch können während des Abfliegen des Feldes nebenbei gesammelte Bilddaten dazu genutzt werden, den Bestand im Feld in Bezug auf Inhaltsstoffe und /oder Feuchtigkeit zu untersuchen. Diese nebenbei gesammelten Informationen können dem Fahrer beispielsweise auf einem Terminal innerhalb der selbstfahrenden landwirtschaftlichen Arbeitsmaschine und oder auf einem Terminal außerhalb der selbstfahrenden landwirtschaftlichen Arbeitsmaschine bereitgestellt und/oder angezeigt werden.

Bei einer vorteilhaften Weiterbildung der erfindungsgemäßen Lösung ist vorgesehen, dass die Steuervorrichtung der landwirtschaftlichen Arbeitsmaschine basierend auf den von der Drohnen-Steuervorrichtung erhaltenen Positionsdaten der Drohnenvorrichtung ein Warnsignal, insbesondere ein optisches Warnsignal und oder akustisches Warnsignal, innerhalb einer Fahrerkabine der landwirtschaftlichen Arbeitsmaschine erzeugt. Hierdurch kann der Fahrer der selbstfahrenden landwirtschaftlichen Arbeitsmaschine zusätzlich auf ein Hindernis hingewiesen werden. Ein optisches Warnsignal kann ein Lichtsignal sein.

Bei einer vorteilhaften Weiterbildung der erfindungsgemäßen Lösung ist vorgesehen, dass die Steuervorrichtung der landwirtschaftlichen Arbeitsmaschine basierend auf den von der Drohnen-Steuervorrichtung erhaltenen Positionsdaten der Drohnenvorrichtung eine bezüglich dem erfassten Hindernis ausweichende Routenänderung der Route der landwirtschaftlichen Arbeitsmaschine initiiert. Er kann es vorgesehen sein, dass die selbstfahrende landwirtschaftliche Arbeitsmaschine durch die ausweichende Routenänderung der Route derart angesteuert und/oder geregelt wird, dass die landwirtschaftliche Arbeitsmaschine eine Kollision mit dem erfassten Hindernis vermeidet.

Bei einer vorteilhaften Weiterbildung der erfindungsgemäßen Lösung ist vorgesehen, dass die Drohnenvorrichtung dazu ausgebildet und/oder programmiert ist, eine Flughöhe bezüglich des erfassten Hindernisses einzunehmen, wenn sich die Drohnenvorrichtung über dem erfassten Hindernis positioniert hat, wobei die Flughöhe bezüglich des erfassten Hindernisses derart ausgewählt ist, dass ein Fahrer, der sich in der landwirtschaftlichen Arbeitsmaschine, insbesondere der Fahrerkabine, befindet, die Drohnenvorrichtung optisch erfassen kann. Hierbei kann es vorgesehen sein, dass diese Flughöhe der Drohnenvorrichtung kleiner und/oder gleich im Vergleich zu einem maximalen Höchstpunkt der selbstfahrenden landwirtschaftlichen Arbeitsmaschine ist. Hierdurch kann ermöglicht werden, dass der Fahrer die Fahrerkabine nicht verlassen muss, um beispielsweise ein optisches Warnsignal der Drohnenvorrichtung zu erkennen und/oder zu erfassen.

Bei einer vorteilhaften Weiterbildung der erfindungsgemäßen Lösung ist vorgesehen, dass die landwirtschaftliche Arbeitsmaschine wenigstens eine Drohnenstation für die Drohnenvorrichtung aufweist, und/oder dass die Drohnenvorrichtung dazu ausgebildet und/oder programmiert ist, ausgehend von der landwirtschaftlichen Arbeitsmaschine sich zunächst zu beabstanden und/oder anschließend eine konstante Beabstandung zur landwirtschaftlichen Arbeitsmaschine einzunehmen, bis ein Hindernis erfasst wird. Die Drohnenstation kann zum Austausch, Laden und/oder Nachfüllen einer Energiespeichereinheit, insbesondere eines Akkus, der Drohnenvorrichtung ausgebildet und/oder programmiert sein.

Die Drohnenvorrichtung kann derart ausgebildet und/oder programmiert sein, dass die Drohnenvorrichtung eine Flugzeit von 15-20 Minuten und/oder ein Gesamtgewicht kleiner 500g und/oder eine Flugreichweite von 2 km und/oder eine Fluggeschwindigkeit bis zu 25 km/h erzielt.

Weitere wichtige Merkmale und Vorteile der Erfindung ergeben sich aus den Unteransprüchen.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder ähnliche oder funktional gleiche Komponenten beziehen.

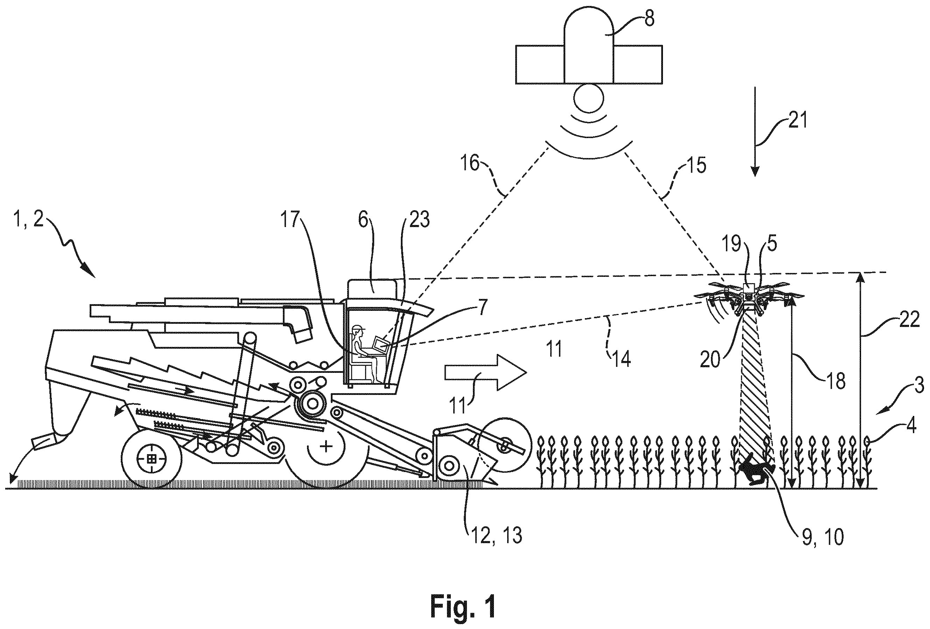

Die Fig. 1 zeigt schematisch und exemplarisch die erfindungsgemäße selbstfahrende landwirtschaftliche Arbeitsmaschine 1 zur Ernte eines Gutes 4 eines landwirtschaftlichen Feldes 3, wobei die selbstfahrende landwirtschaftliche Arbeitsmaschine 1 beispielhaft als selbstfahrender Mähdrescher 2 ausgebildet ist. Diese selbstfahrende landwirtschaftliche Arbeitsmaschine 1 weist eine Drohnenvorrichtung 5 zur Erfassung von Hindernissen 9 im landwirtschaftlichen Feld 3 auf.

Die Drohnenvorrichtung 5 ist als autonom fliegendes unbemanntes Luftfahrzeug ausgebildet sein. Hierdurch kann ohne weitere menschliche Eingriffe bzw. Steuerungen eine Flugpositionierung der Drohnenvorrichtung 5 relativ zur und/oder bezüglich der selbstfahrenden landwirtschaftlichen Arbeitsmaschine 1 bewirkt und/oder ausgeführt werden.

Das Hindernis 9 im landwirtschaftlichen Feld 3, das von der Drohnenvorrichtung 5 erfasst wurde, ist beispielweise ein Tier 10. Die Drohnenvorrichtung 5 ist zur berührungslosen Erfassung, dieser Hindernisse 9 in Form eines Tieres 10 ausgebildet und/oder programmiert sein. So wie es in der Fig. 1 angedeutet ist, ist die Drohnenvorrichtung 5 dazu ausgebildet und/oder programmiert, sich über einem erfassten Hindernis 9 zu positionieren. Hierbei kann sich die Drohnenvorrichtung 5, insbesondere bezüglich der Erdanziehungsrichtung 21 der Erdanziehungskraft, über dem erfassten Hindernis 9 derart positionieren, dass wenigstens ein Teil des erfassten Hindernisses 9, insbesondere bezüglich der Erdanziehungsrichtung 21 der Erdanziehungskraft, unterhalb der Drohnenvorrichtung 5 liegt. Mit anderen Worten ausgedrückt, verharrt die Drohnenvorrichtung 5 über dem erfassten und/oder gefundenen Hindernis 9.

Ein erfindungsgemäßer Vorteil ist insbesondere darin zu sehen, dass die Hindernisse 9 in Form von Lebewesen 10 rechtzeitig erkannt werden, sodass dein solches Lebewesen 10 weder schwer verletzt noch getötet wird.

Durch den Einsatz der erfindungsgemäßen selbstfahrenden landwirtschaftlichen Arbeitsmaschine 1 mit der dazugehörigen Drohnenvorrichtung 5 werden Hindernisse 9 rechtzeitig erkannt werden, ohne dass neben einem Fahrer 17 der selbstfahrenden landwirtschaftlichen Arbeitsmaschine 1 zusätzliche weitere Personengruppen mit Hunden und/oder mit menschlich gesteuerten bzw. nicht autonomen Drohnenvorrichtungen zur Erfassung von Hindernissen 9 in Form von Lebewesen 10 erforderlich sind. Mit anderen Worten ausgedrückt, wird die Ernte zeitlich und bezüglich der Qualität der Erntegutes als auch bezüglich der Sicherheit der Lebewesen 10 im Bereich des landwirtschaftlichen Feldes 3 mittels der erfindungsgemäßen selbstfahrenden landwirtschaftlichen Arbeitsmaschine 1 optimiert.

Die Drohnenvorrichtung 5 ist dazu ausgebildet und/oder programmiert ist, die Position über dem erfassten Lebewesen 10 beizubehalten, wenn sich das erfasste Lebewesen 10 auf dem landwirtschaftlichen Feld 3 bewegt. Dies hat den Vorteil, es dem Fahrer 17 der selbstfahrenden landwirtschaftlichen Arbeitsmaschine 1 ohne größeren Suchaufwand ermöglicht wird, stets die Position des erfassten Lebewesens 10 einfach und schnell zu erfassen. Hierbei ist es vorgesehen, dass die Drohnenvorrichtung 5 dazu ausgebildet und/oder programmiert ist, bei der Verfolgung des erfassten Lebewesen 5 Kollisionen mit der selbstfahrenden landwirtschaftlichen Arbeitsmaschine 1 zu vermeiden, falls das erfasste Lebewesen 5 beispielsweise unkontrolliert in einen zu nahen Bereich der selbstfahrenden landwirtschaftlichen Arbeitsmaschine 1 sich bewegt.

Die Drohnenvorrichtung 5 weist wenigstens eine Kameravorrichtung 20 zur Erfassung von Hindernissen 9, insbesondere von Lebewesen 10, im landwirtschaftlichen Feld 4 auf. Die Drohnenvorrichtung 5 ist dazu ausgebildet und/oder programmiert ist, ein akustisches Warnsignal und/oder optisches Warnsignal zu erzeugen, während die Drohnenvorrichtung 5 über dem erfassten Hindernis 9, insbesondere dem erfassten Lebewesen 10, positioniert ist. Der Fahrer 17 der selbstfahrenden landwirtschaftlichen Arbeitsmaschine 1 kann dieses akustische Warnsignal und/oder dieses optische Warnsignal erfassen.

Die landwirtschaftliche Arbeitsmaschine 1 weist wenigstens eine Steuervorrichtung 7 zur Steuerung und/oder Regelung der landwirtschaftlichen Arbeitsmaschine 1 und/oder Komponenten der landwirtschaftlichen Arbeitsmaschine 1 auf. Ferner weist die Drohnenvorrichtung 5 wenigstens eine Drohnen-Steuervorrichtung 19 zur Steuerung und/oder Regelung der Drohnenvorrichtung 5 und/oder Komponenten der Drohnenvorrichtung auf. Die Steuervorrichtung 7 der landwirtschaftlichen Arbeitsmaschine 1 und die Drohnen-Steuervorrichtung 19 der Drohnenvorrichtung 5 sind kommunizierend über eine drahtlose Kommunikationsverbindung 14 miteinander verbunden. Die drahtlose Kommunikationsverbindung 14 zur Datenübertragung kann als eine WLAN-Verbindung und/oder als eine Funkverbindung, ausgebildet sein.

Die Drohnen-Steuervorrichtung 19 ist zur Bestimmung von Positionsdaten der Drohnenvorrichtung 5 bezüglich des landwirtschaftlichen Feldes 4 mit einer Positionsbestimmungsvorrichtung 8 über eine drahtlose Kommunikationsverbindung 15 kommunizierend verbunden. Die Positionsbestimmungsvorrichtung 8 kann ein Globales Positionsbestimmungssystem und/oder ein GNSS (Global Navigation(al) Satellite System) sein. Auch die Steuervorrichtung 7 der landwirtschaftlichen Arbeitsmaschine 1 zur Bestimmung von Positionsdaten der landwirtschaftlichen Arbeitsmaschine 1 bezüglich des landwirtschaftlichen Feldes 3 kommunizierend über eine drahtlose Kommunikationsverbindung 16 mit der Positionsbestimmungsvorrichtung 8 verbunden.

Die Drohnen-Steuervorrichtung 19 der Drohnenvorrichtung 5 ist dazu ausgebildet und/oder programmiert, die mit der Positionsbestimmungsvorrichtung 8 bestimmten Positionsdaten der Drohnenvorrichtung 5 bezüglich des landwirtschaftlichen Feldes 3 an die Steuervorrichtung 7 der landwirtschaftlichen Arbeitsmaschine 1 zu übermitteln, wenn die Drohnenvorrichtung 5 über dem erfassten Hindernis 9, insbesondere über dem erfassten Lebewesen 10, positioniert ist. Also in dem Fall, der in der Fig. 1 angedeutet ist. Hierdurch wird die Steuervorrichtung 7 der landwirtschaftlichen Arbeitsmaschine 1 bezüglich der Position des erfassten Hindernisses 9 informiert. Hierbei kann die Steuervorrichtung 7 der landwirtschaftlichen Arbeitsmaschine 1 dazu ausgebildet und/oder programmiert sein, basierend auf Positionsdaten der landwirtschaftlichen Arbeitsmaschine 1 und den von der Drohnenvorrichtung 5 übermittelten Position des erfassten Hindernisses 9 die Beabstandung zwischen der landwirtschaftlichen Arbeitsmaschine 1 und dem erfassten Hindernis 9 zu ermitteln. Je nach ermittelter Beabstandung zwischen der landwirtschaftlichen Arbeitsmaschine 1 und dem erfassten Hindernis 9 kann die die Steuervorrichtung 7 der landwirtschaftlichen Arbeitsmaschine 1 dazu ausgebildet und/oder programmiert sein, die landwirtschaftliche Arbeitsmaschine 1 abzubremsen, insbesondere zu stoppen, und/oder eine Routenänderung der landwirtschaftlichen Arbeitsmaschine 1 zu bewirken, um ein Umfahren des Hindernisses 9 zu erzielen. Somit wird beispielweise sichergestellt, dass ein Arbeitsaggregat 12, insbesondere ein Schneidwerk 13, der der landwirtschaftlichen Arbeitsmaschine 1 nicht das Hindernis 9 bzw. Lebewesen 10 kontaktiert bzw. verletzt oder tötet.

Die Steuervorrichtung 7 der landwirtschaftlichen Arbeitsmaschine 1 ist dazu ausgebildet und/oder programmiert ist, Routendaten bezüglich einer Route der landwirtschaftlichen Arbeitsmaschine 1 an die Drohnen-Steuervorrichtung 19 der Drohnenvorrichtung 5 zu übermitteln, wobei die Drohnen-Steuervorrichtung 19 der Drohnenvorrichtung 5 dazu ausgebildet und/oder programmiert ist, die Drohnenvorrichtung 5 basierend auf den Routendaten entlang der Route der landwirtschaftlichen Arbeitsmaschine 1 derart anzusteuern und/oder zu steuern, dass die Drohnenvorrichtung 5 die auf den Routendaten basierende Route abfliegt, bevor die landwirtschaftliche Arbeitsmaschine 1 diese Route abfährt, wobei das Abfliegen der auf den Routendaten basierende Route unterbrochen wird, wenn sich die Drohnenvorrichtung 5 über dem erfassten Hindernis 9, insbesondere dem Lebewesen 10, positioniert. Hierdurch markiert die Drohnenvorrichtung 5 die Position des erfassten Hindernisses 9.

Hierbei können die Routendaten, insbesondere in Form von GPS-Daten und/oder GNSS-Daten, auch die Fläche des landwirtschaftlichen Feldes 3, die von der selbstfahrenden landwirtschaftlichen Arbeitsmaschine 1 bearbeitet wird, umfassen. Hierdurch kann für die Drohnenvorrichtung 5 ein bezüglich des landwirtschaftlichen Feldes 3 begrenzter Arbeitsraum definiert werden, die die Drohnenvorrichtung 5 bezüglich Hindernisse 9 überprüft. Diese Routendaten können wenigstens eine Fahrrichtung 11 und/oder mehrere Fahrrichtungen 11 der selbstfahrenden landwirtschaftlichen Arbeitsmaschine 1 und/oder Wendestrategien und/oder Wendebereiche angeben. Ferner kann die Drohnenvorrichtung 5 dazu ausgebildet und/oder programmiert sein, basierend auf diesen Routendaten mit einer definierten Beabstandung, insbesondere einer Minimal-Beabstandung, bezüglich der selbstfahrenden landwirtschaftlichen Arbeitsmaschine 1 das landwirtschaftliche Feld 3 bezüglich Hindernisse 9 zu überwachen.

Die Fläche des Feldes 3 wird der Drohnenvorrichtung 5 im Vorhinein per GPS Daten übermittelt um einen begrenzten Arbeitsraum zu schaffen. Außerdem wird die Fahrrichtung und Wendestrategie angegeben, um den Flug der Drohnenvorrichtung möglichst so zu gestalten, dass diese der Erntemaschine immer ein kurzes Stück voraus fliegt.

Die Kameravorrichtung 20 zur Erfassung von Hindernissen 9, insbesondere von Lebewesen 10, kann als Infrarotkamera und/oder Wärmebildkamera ausgebildet sein. Alternativ oder zusätzlich kann eine Kameravorrichtung 20 als Farberkennungsvorrichtung ausgebildet sein. Eine solche Farberkennungsvorrichtung kann beispielsweise eine Kameravorrichtung 20 zur Erfassung und/oder zur Messung eines Farbspektrums sein. Hierbei können bräunliche Farben Hindernissen 9, 10 zugeordnet werden, während grünliche Farben dem zu erntenden Gut 4 des landwirtschaftlichen Feldes 3 zugeordnet werden können.

Die wenigstens eine Kameravorrichtung 20 ist dazu ausgebildet und/oder programmiert, das zu erntende Gut 4 des landwirtschaftlichen Feldes 3 solange zu erfassen, bis die Drohnenvorrichtung 5 über einem erfassten Hindernis 9, insbesondere einem erfassten Lebewesen 10, positioniert ist. Hierbei können von der Kameravorrichtung 5 beispielsweise Bilddaten in Bezug auf Zustand des Bestands im Feld 3 erzeugt und ausgewertet werden. Hierdurch können während des Abfliegen des Feldes 3 nebenbei gesammelte Bilddaten dazu genutzt werden, den Bestand im Feld 3 in Bezug auf Inhaltsstoffe und /oder Feuchtigkeit zu untersuchen. Diese nebenbei gesammelten Informationen können dem Fahrer 17 beispielsweise auf einem Terminal innerhalb der selbstfahrenden landwirtschaftlichen Arbeitsmaschine 1 und oder auf einem Terminal außerhalb der selbstfahrenden landwirtschaftlichen Arbeitsmaschine 1 bereitgestellt und/oder angezeigt werden.

Die Steuervorrichtung 7 der landwirtschaftlichen Arbeitsmaschine 1 kann basierend auf den von der Drohnen-Steuervorrichtung 19 erhaltenen Positionsdaten der Drohnenvorrichtung 5 ein Warnsignal, insbesondere ein optisches Warnsignal und oder akustisches Warnsignal, innerhalb einer Fahrerkabine 23 der landwirtschaftlichen Arbeitsmaschine 1 erzeugen. Hierdurch kann der Fahrer 17 der selbstfahrenden landwirtschaftlichen Arbeitsmaschine 1 zusätzlich auf das Hindernis 9 hingewiesen werden.

Die Steuervorrichtung 7 der landwirtschaftlichen Arbeitsmaschine 1 kann basierend auf den von der Drohnen-Steuervorrichtung 19 erhaltenen Positionsdaten der Drohnenvorrichtung 5 eine bezüglich dem erfassten Hindernis 9 ausweichende Routenänderung der Route der landwirtschaftlichen Arbeitsmaschine 1 initiieren. Er kann es vorgesehen sein, dass die selbstfahrende landwirtschaftliche Arbeitsmaschine 1 durch die ausweichende Routenänderung der Route derart angesteuert und/oder geregelt wird, dass die landwirtschaftliche Arbeitsmaschine 1 eine Kollision mit dem erfassten Hindernis 9 vermeidet.

Die Drohnenvorrichtung 5 kann dazu ausgebildet und/oder programmiert sein, eine Flughöhe 18 bezüglich des erfassten Hindernisses 9 einzunehmen, wenn sich die Drohnenvorrichtung 5 über dem erfassten Hindernis 9 positioniert hat, wobei die Flughöhe 18 bezüglich des erfassten Hindernisses 9 derart ausgewählt ist, dass ein Fahrer 17, der sich in der landwirtschaftlichen Arbeitsmaschine 1, insbesondere der Fahrerkabine 23, befindet, die Drohnenvorrichtung 5 optisch erfassen kann. Hierbei kann es vorgesehen sein, dass diese Flughöhe 18 der Drohnenvorrichtung 18 kleiner und/oder gleich im Vergleich zu einem maximalen Höchstpunkt 22 der selbstfahrenden landwirtschaftlichen Arbeitsmaschine 1 ist. Hierdurch kann ermöglicht werden, dass der Fahrer 17 die Fahrerkabine 23 nicht verlassen muss, um beispielsweise ein optisches Warnsignal der Drohnenvorrichtung 5 zu erkennen und/oder zu erfassen.

Bei einer vorteilhaften Weiterbildung der erfindungsgemäßen Lösung ist vorgesehen, dass landwirtschaftlichen Arbeitsmaschine 1 wenigstens eine Drohnenstation 6 für die Drohnenvorrichtung 5 aufweist. Die Drohnenstation 6 kann zur Energieversorgung der Drohnenvorrichtung 5 ausgebildet und/oder programmiert sein. Die Drohnenstation 6 kann auf einem Dachabschnitt und/oder einem Haubenabschnitt und/oder einer ähnlichen exponierten Lage auf der selbstfahrenden landwirtschaftlichen Arbeitsmaschine 1 ausgebildet und/oder angeordnet sein. Die Drohnenvorrichtung 5 ist in der Lage, in regelmäßigen zeitlichen Abständen autarke Überflüge das durch die landwirtschaftlichen Arbeitsmaschine 1 zu bearbeitende Feld 3 vorzunehmen. Die Drohnenvorrichtung 5 kann dazu ausgebildet und/oder programmiert sein, ausgehend von der landwirtschaftlichen Arbeitsmaschine 1 sich zunächst zu beabstanden und anschließend eine konstante Beabstandung zur landwirtschaftlichen Arbeitsmaschine 1 einzunehmen, bis ein Hindernis 9 erfasst wird.

### Bezugszeichenliste

- 1: Selbstfahrende landwirtschaftliche Arbeitsmaschine
- 2: Mähdrescher
- 3: landwirtschaftliches Feld
- 4: zu erntendes Gut
- 5: Drohnenvorrichtung
- 6: Drohnenstation
- 7: Steuervorrichtung
- 8: Positionsbestimmungsvorrichtung
- 9: Hindernis
- 10: Lebewesen
- 11: Fahrrichtung
- 12: Arbeitsaggregat
- 13: Schneidwerk
- 14: drahtlose Kommunikationsverbindung
- 15: drahtlose Kommunikationsverbindung
- 16: drahtlose Kommunikationsverbindung
- 17: Fahrer
- 18: Flughöhe
- 19: Drohnen-Steuervorrichtung
- 20: Kameravorrichtung
- 21: Erdanziehungsrichtung
- 22: Maximaler Höchstpunkt der selbstfahrenden landwirtschaftlichen Arbeitsmaschine
- 23: Fahrerkabine

## Patentansprüche

1. Selbstfahrende landwirtschaftliche Arbeitsmaschine (1), insbesondere ein Mähdrescher (2) oder ein Feldhäcksler, zur Ernte eines Gutes (4) eines landwirtschaftlichen Feldes (3),
- mit wenigstens einer Drohnenvorrichtung (5) zur Erfassung von Hindernissen (9) im landwirtschaftlichen Feld (3),
**dadurch gekennzeichnet,**
- **dass** die Drohnenvorrichtung (5) dazu ausgebildet und/oder programmiert ist, sich über einem erfassten Hindernis (9) zu positionieren und über dem erfassten Hindernis (9) zu verharren.

2. Selbstfahrende landwirtschaftliche Arbeitsmaschine (1) nach Anspruch 1,
**dadurch gekennzeichnet,**
**dass** die Drohnenvorrichtung (5) dazu ausgebildet und/oder programmiert ist, ein Hindernis (9) in Form eines Lebewesens (10) zu erfassen und sich über diesem erfassten Lebewesen (10) zu positionieren.

3. Selbstfahrende landwirtschaftliche Arbeitsmaschine (1) nach Anspruch 2,
**dadurch gekennzeichnet,**
**dass** die Drohnenvorrichtung (5) dazu ausgebildet und/oder programmiert ist, die Position über dem erfassten Lebewesen (10) beizubehalten, wenn sich das erfasste Lebewesen (10) auf dem landwirtschaftlichen Feld (3) bewegt.

4. Selbstfahrende landwirtschaftliche Arbeitsmaschine (1) nach einem der vorhergehenden Ansprüche,
**dadurch gekennzeichnet,**
**dass** die Drohnenvorrichtung (5) wenigstens eine Kameravorrichtung (20) zur Erfassung von Hindernissen (9), insbesondere von Lebewesen (10), im landwirtschaftlichen Feld (3) aufweist.

5. Selbstfahrende landwirtschaftliche Arbeitsmaschine (1) nach einem der vorhergehenden Ansprüche,
**dadurch gekennzeichnet,**
**dass** die Drohnenvorrichtung (5) dazu ausgebildet und/oder programmiert ist, ein akustisches Warnsignal und/oder optisches Warnsignal zu erzeugen, während die Drohnenvorrichtung (5) über dem erfassten Hindernis (9), insbesondere dem erfassten Lebewesen (10), positioniert ist.

6. Selbstfahrende landwirtschaftliche Arbeitsmaschine (1) nach einem der vorhergehenden Ansprüche,
**dadurch gekennzeichnet,**
- **dass** die landwirtschaftliche Arbeitsmaschine (1, 2) wenigstens eine Steuervorrichtung (7) zur Steuerung und/oder Regelung der landwirtschaftlichen Arbeitsmaschine (1, 2) aufweist,
- wobei die Drohnenvorrichtung (5) wenigstens eine Drohnen-Steuervorrichtung (19) zur Steuerung und/oder Regelung der Drohnenvorrichtung (5) aufweist,
- wobei die Steuervorrichtung (7) der landwirtschaftlichen Arbeitsmaschine (1, 2) und die Drohnen-Steuervorrichtung (19) der Drohnenvorrichtung (5) kommunizierend miteinander verbunden sind.

7. Selbstfahrende landwirtschaftliche Arbeitsmaschine (1) nach Anspruch 6,
**dadurch gekennzeichnet,**
- **dass** die Drohnen-Steuervorrichtung (19) zur Bestimmung von Positionsdaten der Drohnenvorrichtung (5) bezüglich des landwirtschaftlichen Feldes (3) mit einer Positionsbestimmungsvorrichtung (8) kommunizierend verbunden ist,
- wobei die Drohnen-Steuervorrichtung (19) der Drohnenvorrichtung (5) dazu ausgebildet und/oder programmiert ist, die mit der Positionsbestimmungsvorrichtung (8) bestimmten Positionsdaten der Drohnenvorrichtung (5) bezüglich des landwirtschaftlichen Feldes (3) an die Steuervorrichtung (7) der landwirtschaftlichen Arbeitsmaschine (1, 2) zu übermitteln, wenn die Drohnenvorrichtung (5) über dem erfassten Hindernis (9), insbesondere über dem erfassten Lebewesen (10), positioniert ist.

8. Selbstfahrende landwirtschaftliche Arbeitsmaschine (1) nach Anspruch 6 oder 7,
**dadurch gekennzeichnet,**
- **dass** die Steuervorrichtung (7) der landwirtschaftlichen Arbeitsmaschine (1, 2) dazu ausgebildet und/oder programmiert ist, Routendaten bezüglich einer Route der landwirtschaftlichen Arbeitsmaschine (1, 2) an die Drohnen-Steuervorrichtung (19) der Drohnenvorrichtung (5) zu übermitteln,
- wobei die Drohnen-Steuervorrichtung (19) der Drohnenvorrichtung (5) dazu ausgebildet und/oder programmiert ist, die Drohnenvorrichtung (5) basierend auf den Routendaten entlang der Route der landwirtschaftlichen Arbeitsmaschine (1, 2) derart anzusteuern, dass die Drohnenvorrichtung (5) die auf den Routendaten basierende Route abfliegt, bevor die landwirtschaftliche Arbeitsmaschine (1, 2) diese Route abfährt, wobei das Abfliegen der auf den Routendaten basierende Route unterbrochen wird, wenn sich die Drohnenvorrichtung (5) über dem erfassten Hindernis (9), insbesondere dem Lebewesen (10), positioniert.

9. Selbstfahrende landwirtschaftliche Arbeitsmaschine (1) nach Anspruch 4,
**dadurch gekennzeichnet,**
- **dass** eine Kameravorrichtung (20) zur Erfassung von Hindernissen (9), insbesondere von Lebewesen (10), eine Infrarotkamera ist, und/oder
- **dass** eine Kameravorrichtung (20) zur Erfassung von Hindernissen (9), insbesondere von Lebewesen (10), eine Farberkennungsvorrichtung ist.

10. Selbstfahrende landwirtschaftliche Arbeitsmaschine (1) nach einem der Ansprüche 4 oder 9,
**dadurch gekennzeichnet,**
**dass** wenigstens eine Kameravorrichtung (20) dazu ausgebildet und/oder programmiert ist, das zu erntende Gut (4) des landwirtschaftlichen Feldes (3) solange zu erfassen, bis die Drohnenvorrichtung (5) über einem erfassten Hindernis (9), insbesondere einem erfassten Lebewesen (10), positioniert ist.

11. Selbstfahrende landwirtschaftliche Arbeitsmaschine (1) nach einem der Ansprüche 7 oder 8,
**dadurch gekennzeichnet,**
**dass** die Steuervorrichtung (7) der landwirtschaftlichen Arbeitsmaschine (1, 2) basierend auf den von der Drohnen-Steuervorrichtung (19) erhaltenen Positionsdaten der Drohnenvorrichtung (5) ein Warnsignal innerhalb einer Fahrerkabine (23) der landwirtschaftlichen Arbeitsmaschine (1, 2) erzeugt.

12. Selbstfahrende landwirtschaftliche Arbeitsmaschine (1) nach einem der Ansprüche 7, 8 oder 11,
**dadurch gekennzeichnet,**
**dass** die Steuervorrichtung (7) der landwirtschaftlichen Arbeitsmaschine (1, 2) basierend auf den von der Drohnen-Steuervorrichtung (19) erhaltenen Positionsdaten der Drohnenvorrichtung (5) eine bezüglich dem erfassten Hindernis (9) ausweichende Routenänderung der Route der landwirtschaftlichen Arbeitsmaschine (1, 2) initiiert.

13. Selbstfahrende landwirtschaftliche Arbeitsmaschine (1) nach einem der vorhergehenden Ansprüche,
**dadurch gekennzeichnet,**
- **dass** die Drohnenvorrichtung (5) dazu ausgebildet und/oder programmiert ist, eine Flughöhe (18) bezüglich des erfassten Hindernisses (9) einzunehmen, wenn sich die Drohnenvorrichtung (5) über dem erfassten Hindernis (9) positioniert hat,
- wobei die Flughöhe (18) bezüglich des erfassten Hindernisses (9) derart ausgewählt ist, dass ein Fahrer (17), der sich in der landwirtschaftlichen Arbeitsmaschine (1, 2) befindet, die Drohnenvorrichtung (5) optisch erfassen kann.

14. Selbstfahrende landwirtschaftliche Arbeitsmaschine (1) nach einem der vorhergehenden Ansprüche,
**dadurch gekennzeichnet,**
- **dass** die landwirtschaftliche Arbeitsmaschine (1, 2) wenigstens eine Drohnenstation (6) für die Drohnenvorrichtung (5) aufweist, und/oder
- **dass** die Drohnenvorrichtung (5) dazu ausgebildet und/oder programmiert ist, ausgehend von der landwirtschaftlichen Arbeitsmaschine (1, 2) sich zunächst zu beabstanden und/oder anschließend eine konstante Beabstandung zur landwirtschaftlichen Arbeitsmaschine (1, 2) einzunehmen, bis ein Hindernis (9) erfasst wird.

## Claims

1. Self-propelled agricultural work machine (1), in particular a combine harvester (2) or a forage harvester, for harvesting a crop (4) of an agricultural field (3),
- having at least one drone device (5) for detecting obstacles (9) in the agricultural field (3),
**characterized**
- **in that** the drone device (5) is designed and/or programmed to position itself above a detected obstacle (9) and to remain above the detected obstacle (9).

2. Self-propelled agricultural work machine (1) according to Claim 1, **characterized**
**in that** the drone device (5) is designed and/or programmed to detect an obstacle (9) in the form of a living being (10) and to position itself above this detected living being (10).

3. Self-propelled agricultural work machine (1) according to Claim 2, **characterized**
**in that** the drone device (5) is designed and/or programmed to maintain the position above the detected living being (10) if the detected living being (10) moves on the agricultural field (3).

4. Self-propelled agricultural work machine (1) according to one of the preceding claims,
**characterized**
**in that** the drone device (5) has at least one camera device (20) for detecting obstacles (9), in particular living beings (10), in the agricultural field (3).

5. Self-propelled agricultural work machine (1) according to one of the preceding claims,
**characterized**
**in that** the drone device (5) is designed and/or programmed to generate an acoustic warning signal and/or an optical warning signal, while the drone device (5) is positioned above the detected obstacle (9), in particular the detected living being (10).

6. Self-propelled agricultural work machine (1) according to one of the preceding claims,
**characterized**
- **in that** the agricultural work machine (1, 2) has at least one control device (7) for controlling and/or regulating the agricultural work machine (1, 2),
- wherein the drone device (5) has at least one drone control device (19) for controlling and/or regulating the drone device (5),
- wherein the control device (7) of the agricultural work machine (1, 2) and the drone control device (19) of the drone device (5) are communicatively connected to one another.

7. Self-propelled agricultural work machine (1) according to Claim 6, **characterized**
- **in that** the drone control device (19) is communicatively connected to a position determination device (8) for the purpose of determining position data relating to the drone device (5) with respect to the agricultural field (3),
- wherein the drone control device (19) of the drone device (5) is designed and/or programmed to transmit the position data relating to the drone device (5) with respect to the agricultural field (3), as determined with the position determination device (8), to the control device (7) of the agricultural work machine (1, 2), if the drone device (5) is positioned above the detected obstacle (9), in particular above the detected living being (10).

8. Self-propelled agricultural work machine (1) according to Claim 6 or 7,
**characterized**
- **in that** the control device (7) of the agricultural work machine (1, 2) is designed and/or programmed to transmit route data relating to a route of the agricultural work machine (1, 2) to the drone control device (19) of the drone device (5),
- wherein the drone control device (19) of the drone device (5) is designed and/or programmed to control the drone device (5) along the route of the agricultural work machine (1, 2) on the basis of the route data in such a way that the drone device (5) flies along the route based on the route data before the agricultural work machine (1, 2) travels along this route, wherein the flying along the route based on the route data is interrupted when the drone device (5) is positioned above the detected obstacle (9), in particular the living being (10).

9. Self-propelled agricultural work machine (1) according to Claim 4, **characterized**
- **in that** a camera device (20) for detecting obstacles (9), in particular living beings (10), is an infrared camera, and/or
- **in that** a camera device (20) for detecting obstacles (9), in particular living beings (10), is a colour recognition device.

10. Self-propelled agricultural work machine (1) according to either of Claims 4 and 9,
**characterized**
**in that** at least one camera device (20) is designed and/or programmed to detect the crop (4) to be harvested in the agricultural field (3) until the drone device (5) is positioned above a detected obstacle (9), in particular a detected living being (10).

11. Self-propelled agricultural work machine (1) according to either of Claims 7 and 8,
**characterized**
**in that** the control device (7) of the agricultural work machine (1, 2) generates a warning signal within a driver's cab (23) of the agricultural work machine (1, 2) on the basis of the position data relating to the drone device (5) which are received from the drone control device (19).

12. Self-propelled agricultural work machine (1) according to one of Claims 7, 8 and 11,
**characterized**
**in that** the control device (7) of the agricultural work machine (1, 2) initiates a route change of the route of the agricultural work machine (1, 2) that avoids the detected obstacle (9) on the basis of the position data relating to the drone device (5) which are received from the drone control device (19).

13. Self-propelled agricultural work machine (1) according to one of the preceding claims,
**characterized**
- **in that** the drone device (5) is designed and/or programmed to assume an altitude (18) with respect to the detected obstacle (9) when the drone device (5) has positioned itself above the detected obstacle (9),
- wherein the altitude (18) with respect to the detected obstacle (9) is selected such that a driver (17) located in the agricultural work machine (1, 2) can optically detect the drone device (5).

14. Self-propelled agricultural work machine (1) according to one of the preceding claims,
**characterized**
- **in that** the agricultural work machine (1, 2) has at least one drone station (6) for the drone device (5), and/or
- **in that** the drone device (5) is designed and/or programmed to initially be spaced apart from the agricultural work machine (1, 2) and/or to subsequently assume a constant spacing from the agricultural work machine (1, 2) until an obstacle (9) is detected.

## Revendications

1. Machine de travail agricole (1) automotrice, notamment une moissonneuse-batteuse (2) ou une récolteuse-hacheuse-chargeuse, destinée à la récolte des cultures (4) d'un champ agricole (3),
- comprenant au moins un dispositif de drone (5) pour détecter des obstacles (9) dans le champ agricole (3),
**caractérisée en ce que**
- le dispositif de drone (5) est conçu et/ou programmé pour se positionner au-dessus d'un obstacle (9) détecté et pour se maintenir au-dessus de l'obstacle (9) détecté.

2. Machine de travail agricole (1) automotrice selon la revendication 1,
**caractérisée en ce que**
le dispositif de drone (5) est conçu et/ou programmé pour détecter un obstacle (9) sous la forme d'un être vivant (10) et pour se positionner au-dessus de cet être vivant (10) détecté.

3. Machine de travail agricole (1) automotrice selon la revendication 2,
**caractérisée en ce que**
le dispositif de drone (5) est conçu et/ou programmé pour détecter un conserver la position au-dessus de l'être vivant (10) détecté, si l'être vivant (10) détecté se déplace dans le champ agricole (3).

4. Machine de travail agricole (1) automotrice selon une des revendications précédentes,
**caractérisée en ce que**
le dispositif de drone (5) comprend au moins un dispositif de caméra (20) pour détecter des obstacles (9), notamment des êtres vivants (10), dans le champ agricole (3).

5. Machine de travail agricole (1) automotrice selon une des revendications précédentes,
**caractérisée en ce que**
le dispositif de drone (5) est conçu et/ou programmé pour générer un signal d'avertissement acoustique et/ou un signal d'avertissement optique, pendant que le dispositif de drone (5) est positionné au-dessus de l'obstacle (9) détecté, notamment l'être vivant (10) détecté.

6. Machine de travail agricole (1) automotrice selon une des revendications précédentes,
**caractérisée en ce que**
- la machine de travail agricole (1, 2) présente au moins un dispositif de commande (7) pour la commande et/ou la régulation de la machine de travail agricole (1, 2),
- le dispositif de drone (5) présentant au moins un dispositif de commande de drone (19) pour la commande et/ou la régulation du dispositif de drone (5),
- le dispositif de commande (7) de la machine de travail agricole (1, 2) et le dispositif de commande de drone (19) du dispositif de drone (5) étant reliés entre eux de manière à communiquer.

7. Machine de travail agricole (1) automotrice selon la revendication 6,
**caractérisée en ce que**
- pour déterminer des données de position du dispositif de drone (5) par rapport au champ agricole (3), le dispositif de commande de drone (19) est relié à un dispositif de détermination de position (8) de manière à communiquer avec lui,
- le dispositif de commande de drone (19) du dispositif de drone (5) étant conçu et/ou programmé pour transmettre au dispositif de commande (7) de la machine de travail agricole (1,2), les données de position du dispositif de drone (5) par rapport au champ agricole (3) établies avec le dispositif de détermination de position (8), si le dispositif de drone (5) est positionné au-dessus de l'obstacle (9) détecté, en particulier au-dessus de l'être vivant (10) détecté.

8. Machine de travail agricole (1) automotrice selon la revendication 6 ou 7,
**caractérisée en ce que**
- le dispositif de commande (7) de la machine de travail agricole (1, 2) est conçu et/ou programmé pour transmettre au dispositif de commande de drone (19) du dispositif de drone (5), des données d'itinéraire concernant un itinéraire de la machine de travail agricole (1, 2),
- le dispositif de commande de drone (19) du dispositif de drone (5) étant conçu et/ou programmé pour commander le dispositif de drone (5) sur la base des données d'itinéraire, le long de l'itinéraire de la machine de travail agricole (1, 2), de manière à ce que le dispositif de drone (5) vole suivant l'itinéraire basé sur les données d'itinéraire, avant que la machine de travail agricole (1, 2) ne parcoure cet itinéraire, le vol suivant l'itinéraire basé sur les données d'itinéraire étant interrompu lorsque le dispositif de drone (5) se positionne au-dessus de l'obstacle (9) détecté, notamment de l'être vivant (10).

9. Machine de travail agricole (1) automotrice selon la revendication 4,
**caractérisée en ce que**
- un dispositif de caméra (20) pour la détection d'obstacles (9), notamment d'êtres vivants (10), est une caméra infrarouge, et/ou
- **en ce qu'**un dispositif de caméra (20) pour la détection d'obstacles (9), notamment d'êtres vivants (10), est un dispositif d'identification des couleurs.

10. Machine de travail agricole (1) automotrice selon une des revendications 4 ou 9,
**caractérisée en ce que**
au moins un dispositif de caméra (20) est conçu et/ou programmé pour détecter les cultures (4) à récolter du champ agricole (3), jusqu'à ce que le dispositif de drone (5) soit positionné au-dessus d'un obstacle (9) détecté, notamment d'un être vivant (10) détecté.

11. Machine de travail agricole (1) automotrice selon une des revendications 7 ou 8,
**caractérisée en ce que**
le dispositif de commande (7) de la machine de travail agricole (1, 2) génère un signal d'avertissement à l'intérieur d'une cabine de conduite (23) de la machine de travail agricole (1, 2), sur la base des données de position du dispositif de drone (5) reçues du dispositif de commande de drone (19).

12. Machine de travail agricole (1) automotrice selon une des revendications 7, 8 ou 11,
**caractérisée en ce que**
le dispositif de commande (7) de la machine de travail agricole (1, 2) déclenche un changement de l'itinéraire de la machine de travail agricole (1, 2) de manière à éviter l'obstacle (9) détecté, sur la base des données de position du dispositif de drone (5) reçues du dispositif de commande de drone (19).

13. Machine de travail agricole (1) automotrice selon une des revendications précédentes,
**caractérisée en ce que**
- le dispositif de drone (5) est conçu et/ou programmé pour adopter une hauteur de vol (18) par rapport à l'obstacle (9) détecté, lorsque le dispositif de drone (5) s'est positionné au-dessus de l'obstacle (9) détecté,
- la hauteur de vol (18) par rapport à l'obstacle (9) détecté étant choisie telle qu'un conducteur (17) se trouvant dans la machine de travail agricole (1, 2) puisse repérer optiquement le dispositif de drone (5).

14. Machine de travail agricole (1) automotrice selon une des revendications précédentes,
**caractérisée en ce que**
- la machine de travail agricole (1, 2) comprend au moins un poste de drone (6) pour le dispositif de drone (5), et/ou
- **en ce que** le dispositif de drone (5) est conçu et/ou programmé pour prendre d'abord de la distance en partant de la machine de travail agricole (1, 2) et/ou adopter ensuite une distance constante par rapport à la machine de travail agricole (1, 2), jusqu'à ce qu'un obstacle (9) soit détecté.
